# EUROPEAN PATENT APPLICATION

(11) **EP 2 389 833 A2**
(43) Date of publication of application: **30.11.2011**
(21) Application number: 11176255.5
(22) Date of filing: 02.08.2011
(51) Int. Cl.: A46B 9/02

(54) **Multi mascara brush**

(71) Applicant: Kim, Aiden Taeyeon, Leonia NJ 07605 (US)
(72) Inventor: Kim, Aiden Taeyeon, Leonia NJ 07605 (US)
(74) Representative: Caspary, Karsten

(57) **Abstract**

The present invention relates to a mascara brush including: a body part (10) made of a first material; and a brush molding part (20) made of second and third materials and having body part-coupling members (21) each coupled to the outer periphery of the body part and a plurality of bristles (22) arranged vertically and horizontally along the outer peripheries of the body part-coupling members.

## Description

### [Technical Field]

The present invention relates to a mascara brush adapted to apply mascara to eyelashes.

### [Background Art]

Generally, a mascara applicator, which is one kind of cosmetic for women, is used to apply various colors of mascara to eyelashes to beautify the eyes.

Typically, such a mascara applicator largely includes a container in which mascara is stored, a handle used when opening or closing the container, a brush bar extended downwardly from the handle, and a brush provided on the brush bar. To use the mascara applicator, the mascara is applied to the brush in a process of coupling and separating the handle to and from the container.

The mascara brush has a body part and a brush molding part, which is adapted to apply mascara to eyelashes, and the body part and the brush molding part are injected integrally with each other. Alternatively, they are separately made and then coupled to each other. If a comb molding part (not shown) is additionally provided to arrange the eyelashes neatly, the combs of the comb molding part should have relatively higher thicknesses than the bristles of the brush molding part.

Particularly, the mascara brush can conduct various functions, for example, a volumizing function (which makes eyelashes appear abundant), a curling function (which curls the ends of the eyelashes upwards), a lash lengthening function (which makes the eyelashes appear long) and a cleaning function (which prevents the eyelashes from aggregating together), in accordance with the lengths and shapes of bristles of the mascara brush.

Conventional mascara brushes have fibers or bristles made of a synthetic resin such as nylon having excellent liquid receptability and storability and PBT (PolyButylene Terephthalate) having excellent water absorption and durability and long life terms, and thus, the volumizing, curling, lash lengthening and cleaning functions are provided in accordance with the shapes and arrangements of the fibers or bristles.

Only with the simple materials or shapes of the existing mascara brushes, however, it is hard to perform the volumizing, curling, lash lengthening and cleaning functions, while being provided with more excellent qualities and use experiences, which fails to satisfy more complicated and various demands of consumers. Further, the conventional mascara brushes have limitations in that it is difficult to provide new other complex functions.

### [Disclosure]

### [Technical Problem]

Accordingly, the present invention has been made in view of the above-mentioned problems occurring in the prior art, and it is an object of the present invention to provide a mascara brush that is capable of applying mascara to eyelashes, while softly passing through the eyelashes, such that volumizing, curling, lash lengthening and cleaning functions can be performed with more excellent product qualities and more satisfied use experiences, thereby providing new sense of beauty not obtained in existing mascara brushes.

### [Technical Solution]

To accomplish the above object, according to the present invention, there is provided a mascara brush including: a body part made of a first material; and a brush molding part made of second and third materials and having body part-coupling members each coupled to the outer periphery of the body part and a plurality of bristles arranged vertically and horizontally along the outer peripheries of the body part-coupling members.

According to the present invention, preferably, the body part includes: a central bar; and a plurality of extended bristles protruded horizontally from the outer periphery of the central bar and adapted to form bristle arrangements capable of applying mascara to eyelashes together with the plurality of bristles of the brush molding part.

According to the present invention, preferably, the central bar of the body part is made of a fourth material having higher hardness than the first material and has a central portion formed at the center of the body part and an outer peripheral portion formed around the outer periphery of the central portion in such a manner as to be connected to the extended bristles.

According to the present invention, preferably, the brush molding part includes: a first brush molding part made of the second material and having the body part-coupling member coupled to a portion of the outer periphery of the body part; and a second brush molding part made of the third material and having the body part-coupling member coupled to the other portion of the outer periphery of the body part or the first brush molding part.

According to the present invention, preferably, the body part-coupling members of the first brush molding part and the second brush molding part are formed at different positions from each other in the circumferential direction of the body part.

According to the present invention, preferably, the body part-coupling members of the first brush molding part and the second brush molding part are formed multi-layered in the radial direction of the body part.

According to the present invention, preferably, the first brush molding part and the second brush molding part are formed at different positions from each other in the length direction of the body part.

According to the present invention, preferably, the brush molding part further includes a third brush molding part formed at a different position from the first brush molding part and the second brush molding part in the length direction of the body part, the third brush molding part being made of a fifth material.

According to the present invention, preferably, the mascara brush further includes a comb molding part made of the first, second, or third material and forming comb arrangements capable of tidying eyelashes.

### [Advantageous Effect]

According to the present invention, as mentioned above, there is provided the mascara brush that is capable of applying mascara to eyelashes, while softly passing through the eyelashes, through new materials and shapes, such that volumizing, curling, lash lengthening and cleaning functions can be all performed, thereby providing excellent product qualities, satisfied use experiences, and high sense of beauty, which are not obtained in existing mascara brushes.

Since the plurality of brush members made of the two or three different materials are located on the same (or crossing) vertical and horizontal positions as each other, the mascara is applied by using one side of the mascara brush in the length direction thereof or in the circumferential direction thereof, such that the volumizing, curling, lengthening and separating functions are all performed.

Additionally, the bristles are formed to have a length gradually shortened toward the end side of the body part in the length direction of the body part, such that the mascara brush is inclined to easily apply the mascara to both end portions of the eyelashes arranged serially wherein it is really hard to apply the mascara.

Further, the brush molding part is divided into a plurality of sections having different colors like red, blue and yellow, and in this case, when the mascara brush is displayed for sale or provided for a gift, it can give various beauties different from the simple color and design the existing mascara brushes have, thereby achieving high marketing effects.

### [Description of Drawings]

Fig. 1 is a front view showing a mascara brush according to a first embodiment of the present invention.
Fig. 2 is a sectional view taken along the line A-A of Fig. 1.
Fig. 3 is a sectional view taken along the line B-B of Fig. 2.
Fig. 4 is a front view showing a mascara brush according to a second embodiment of the present invention.
Fig. 5 is a sectional view taken along the line C-C of Fig. 4.
Fig. 6 is a sectional view taken along the line D-D of Fig. 5.
Fig. 7 is a sectional view taken along the line C-C of Fig. 4, which shows a mascara brush according to a third embodiment of the present invention.
Fig. 8 is a sectional view taken along the line E-E of Fig. 7.
Fig. 9 is a front view showing a mascara brush according to a fourth embodiment of the present invention.
Fig. 10 is a longitudinal sectional view of Fig. 9.
Fig. 11 is a front view showing a mascara brush according to a fifth embodiment of the present invention.
Fig. 12 is a longitudinal sectional view of Fig. 11.
Fig. 13 is a front view showing a mascara brush according to a sixth embodiment of the present invention.
Fig. 14 is a longitudinal sectional view of Fig. 13.

### [Mode for Invention]

According to preferred embodiments of the present invention, mascara brush structures are suggested to effectively perform all of the volumizing function of making eyelashes appear abundant, the curling function of curling the ends of the eyelashes upwards in order to prevent the eyelashes from going down, the lengthening function of making the eyelashes appear long, and the cleaning function of separating the eyelashes in order to prevent the eyelashes from becoming adhered to each other.

Hereinafter, an explanation on a mascara brush according to preferred embodiments of the present invention will be in detail given with reference to the attached drawings.

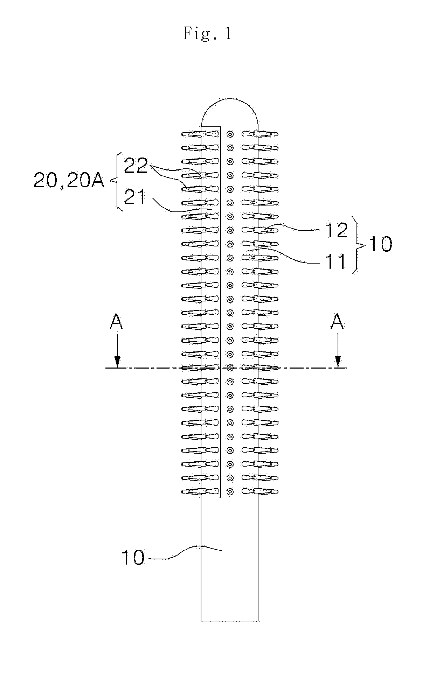

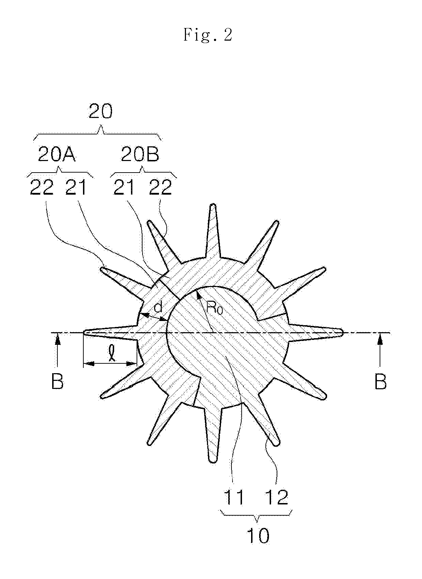

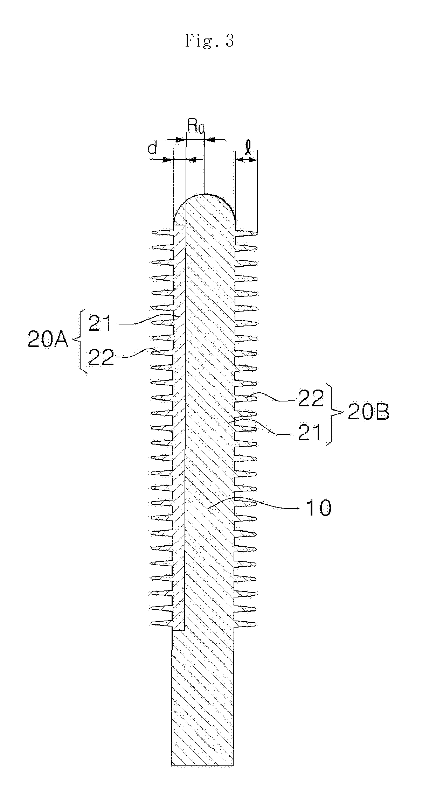

Fig. 1 is a front view showing a mascara brush according to a first embodiment of the present invention, Fig. 2 is a sectional view taken along the line A-A of Fig. 1, and Fig. 3 is a sectional view taken along the line B-B of Fig. 2.

Referring to Figs. 1 to 3, there is provided a mascara brush according to the present invention, wherein a brush molding part 20 is disposed radially along a body part 10. In this case, the body part 10 is made of a first material, and the brush molding part 20 is made of second and third materials different from the first material of the body part 10.

The first, second and third materials are different in at least one of their materials, hardness and colors, which are used to easily define their different features, and in the preferred embodiments of the present invention, therefore, they are not suggested to define their specific components, compositions and colors.

The first, second and third materials may be made of different materials from one another. For example, the body part 10 is made of a metal material (the first material), and the brush molding part 20 is made of nylon (the second material) and PBT (the third material).

The first, second and third materials may be made of different hardness from one another. For example, while the first, second and third materials are being made of PBT, the body part 10, which is disposed at the center of the mascara brush, is made of PBT having shore hardness of 50Hs to 75Hs (the first material), and the brush molding part 20, which is disposed along the outer periphery of the mascara brush, is made of PBT having shore hardness of 30Hs to 40Hs (the second material) and PBT having shore hardness of 40Hs to 50Hs (the third material).

The first, second and third materials may be made of different colors from one another. For example, the body part 10 is made of PBT having a red color (the first material), and the brush molding part 20 is made of PBT having a blue color (the second material) and PBT having a yellow color (the third material).

According to the first embodiment of the present invention, the brush molding part 20 has body part-coupling members 21 each coupled to the outer periphery of the body part 10 and a plurality of bristles 22 arranged vertically and horizontally along the outer peripheries of the body part-coupling members 21.

Further, the brush molding part 20 includes a first brush molding part 20A made of the second material and a second brush molding part 20B made of the third material, which are disposed at different positions from each other in the circumferential direction of the body part 10.

The first brush molding part 20A is made of the second material and has the body part-coupling member 21 coupled to a portion of the outer periphery of the body part 10. The second brush molding part 20B is made of the third material and has the body part-coupling member 21 coupled to the other portion of the outer periphery of the body part 10.

The body part 10, which is made of the first material, has a central bar 11 disposed at the center in the radial direction thereof and a plurality of extended bristles 12 protruded horizontally (radially) from the outer periphery of the central bar 11 as an integral body with the central bar 11 to form bristle arrangements capable of applying mascara to eyelashes together with the plurality of bristles 22.

The first brush molding part 20A, the second brush molding part 20B and the extended bristles 12 become brush members adapted to apply mascara to eyelashes, such that the brush members made of the first, second and third materials having different features (materials, hardness, colors and so on) are located on the same (or crossing) vertical and horizontal positions as each other.

Accordingly, even if mascara is applied by using one side of the mascara brush in the length direction of the mascara brush or in the circumferential direction of the mascara brush, the first, second and third materials are selectively connected or combined to each other, thereby accomplishing the volumizing, curling, lengthening and separating functions.

Within the range of the shore hardness between 30Hs and 75Hs, for example, if the first material has higher hardness than the second and third materials, the first brush molding part 20A and the second brush molding part 20B, which are formed softer around the body part 10 located at the center of the mascara brush, can be easily coupled to each other (for example, through multi injection, assembly, etc.) and further obtain firm strength in use. Moreover, the brush members are located in such a manner as to have different hardness from each other along the circumferential direction of the mascara brush, and in accordance with a user's preference, therefore, as the mascara brush is rotated to make the brush member having given hardness positioned toward the eyelashes or to make the boundary portion between the brush members having different hardness from each other positioned toward the eyelashes, which at the same time applying the two hardness.

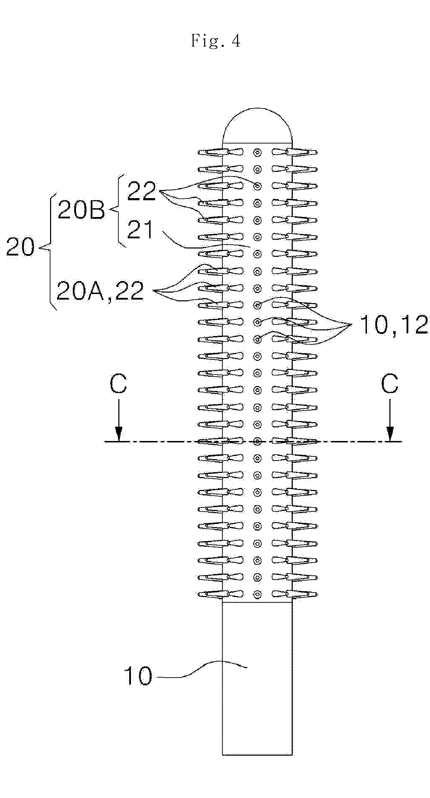

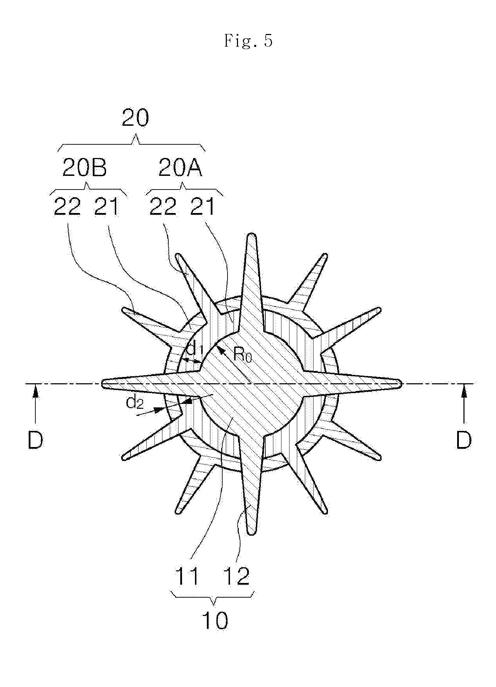

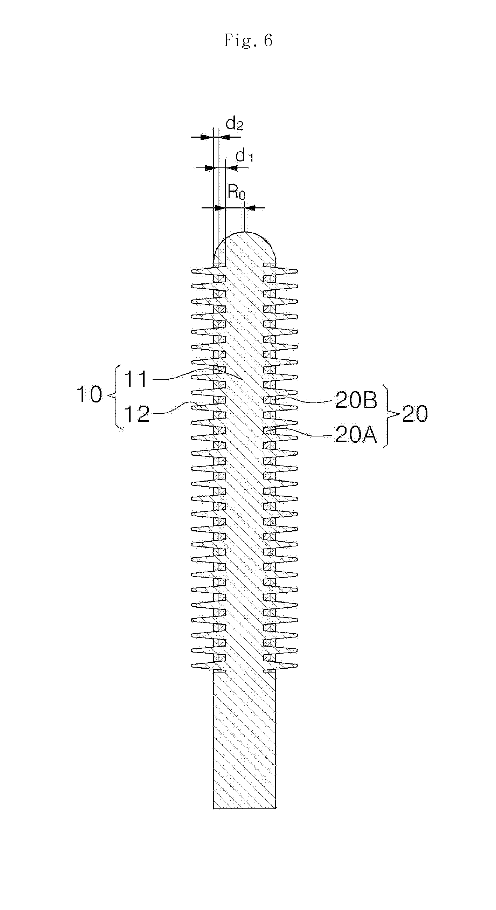

Fig. 4 is a front view showing a mascara brush according to a second embodiment of the present invention, Fig. 5 is a sectional view taken along the line C-C of Fig. 4, and Fig. 6 is a sectional view taken along the line D-D of Fig. 5.

Referring to Figs. 4 to 6, the mascara brush according to the second embodiment of the present invention is different from that according to the first embodiment of the present invention in that the body part-coupling members 21 of the first brush molding part 20A and the second brush molding part 20B are formed multi-layered along the radial direction of the body part 10.

That is, if the body part-coupling members 21 are formed to have a thickness d along the body part 10, according to the first embodiment of the present invention, the first brush molding part 20A and the second brush molding part 20B have the thickness d. Contrarily, according to the second embodiment of the present invention, the first brush molding part 20A has a thickness d1 (d1<d) and the second brush molding part 20B has a thickness d2 (d2=d-d1).

According to the second embodiment of the present invention, further, the mascara brush has a plurality of bristles 22 (for example, eight bristles) constituting the first brush molding part 20A, a plurality of bristles 22 (for example, eight bristles) constituting the second brush molding part 20B, and a plurality of extended bristles 12 (for example, four bristles) constituting the body part 10, which are regularly formed along the circumferential direction of the mascara brush.

Since the bristles 22 of the first brush molding part 20A, the bristles 22 of the second brush molding part 20B and the extended bristles 12 of the body part 10 are regularly formed along the circumferential direction of the mascara brush, the application of the mascara can be achieved at all positions of the mascara brush through the brush members made of different materials from each other.

On the other hand, if the bristles 22 of the first brush molding part 20A, the bristles 22 of the second brush molding part 20B and the extended bristles 12 of the body part 10 are irregularly formed along the circumferential direction of the mascara brush, a portion of the mascara brush where the brush members gather and a portion of the mascara brush having relatively strong hardness can be selectively used in accordance with a user's preference.

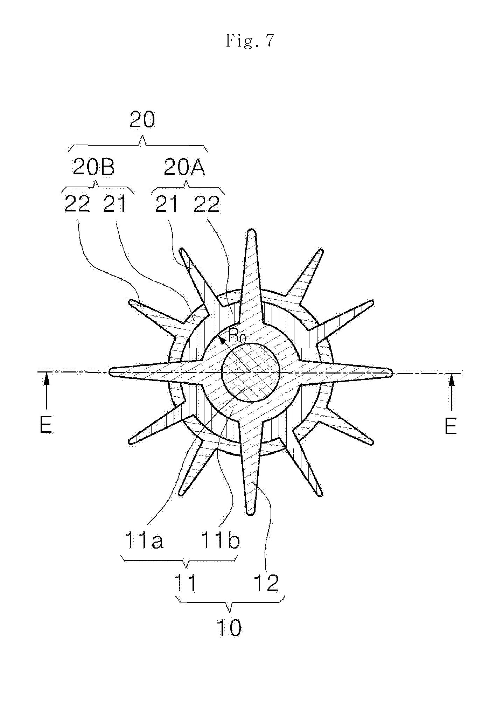

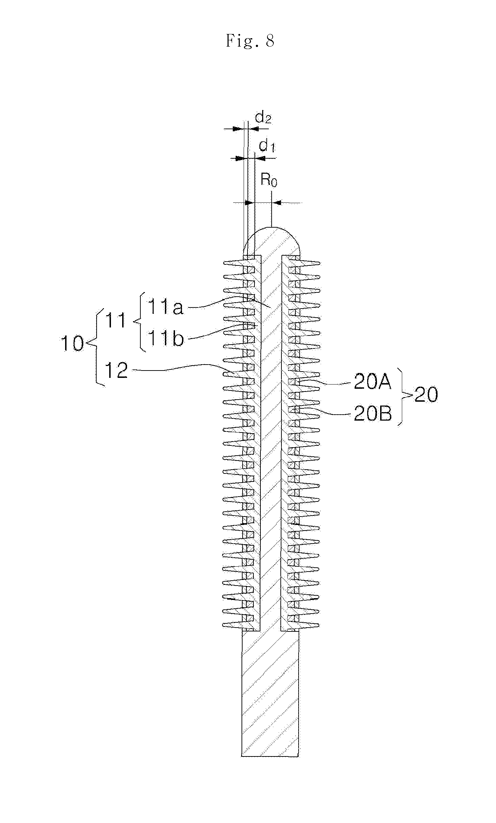

Fig. 7 is a sectional view taken along the line C-C of Fig. 4, which shows a mascara brush according to a third embodiment of the present invention, and Fig. 8 is a sectional view taken along the line E-E of Fig. 7.

Referring to Figs. 7 and 8, the mascara brush according to the third embodiment of the present invention is different from that according to the second embodiment of the present invention in that the central bar 11 of the body part 10 has a central portion 11 a and an outer peripheral portion 11 b having different materials from each other.

The central portion 11 a formed at the center of the body part 10 is made of a fourth material, and the outer peripheral portion 11 b formed around the outer periphery of the central portion 11 a is made of the first material in such a manner as to be connected integrally with the extended bristles 12.

The fourth material is used to easily define the features different from the first, second and third materials in their materials, hardness and colors, and in the preferred embodiments of the present invention, therefore, the fourth material is not suggested to define the specific components, compositions and colors. Since the central portion 11 a is formed at the center of the mascara brush, however, it is desirable that the fourth material should have higher hardness than other materials including the first material.

The body part 10 is formed to have a diameter R0 (for example, the diameter in a range between 1.5 mm and 3.0 mm), and at this time, the central portion 11a, which is made of the fourth material having higher hardness than the first to third materials, is additionally formed at the center of the body part 10, such that the third embodiment of the present invention can obtain relatively higher strength when compared with the first and second embodiments of the present invention.

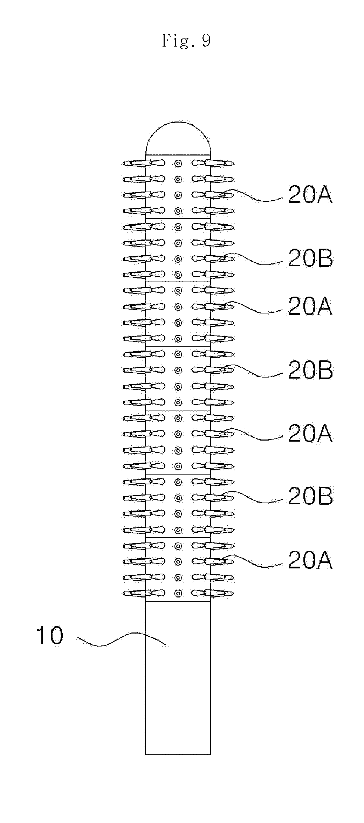

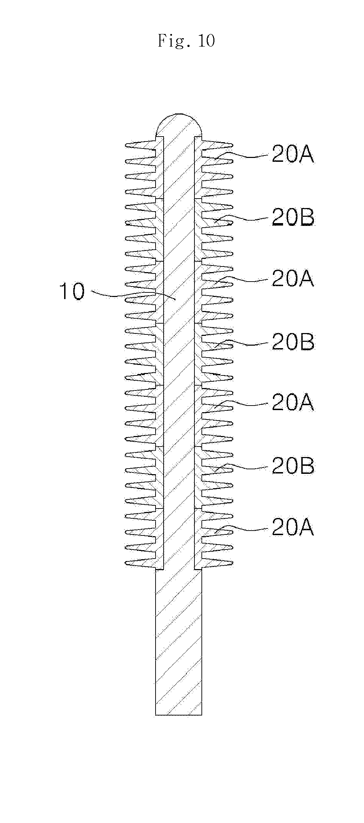

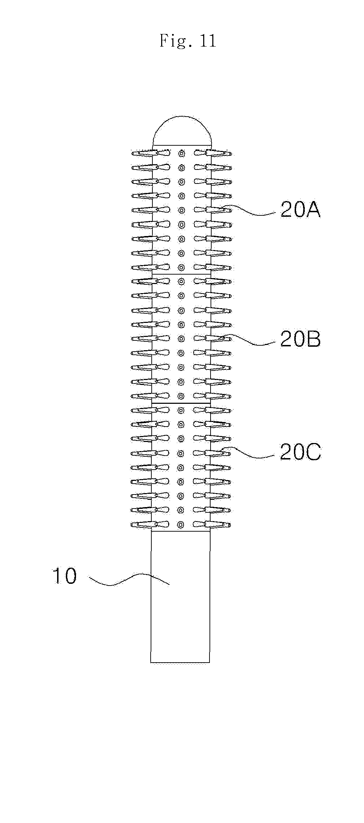

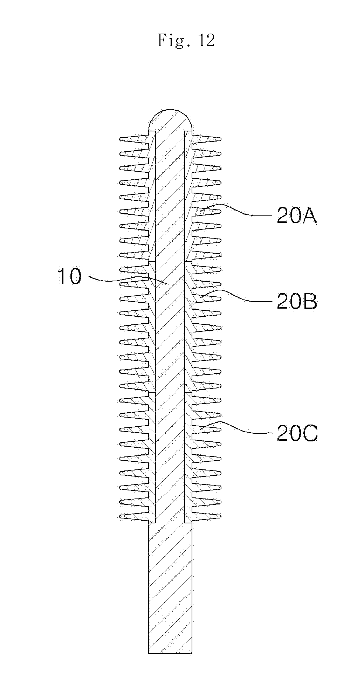

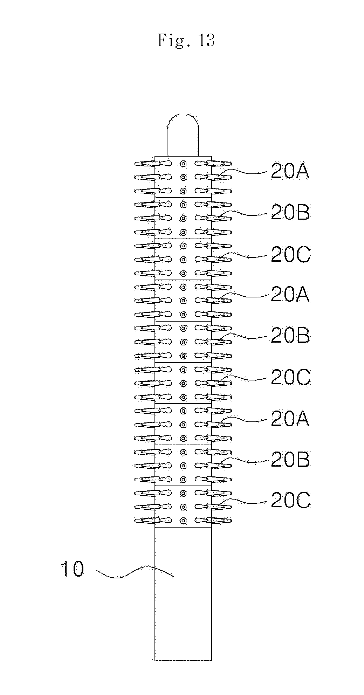

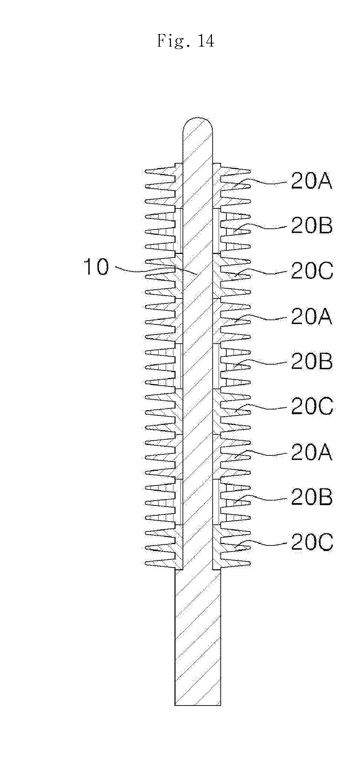

Fig. 9 is a front view showing a mascara brush according to a fourth embodiment of the present invention, Fig. 10 is a longitudinal sectional view of Fig. 9, Fig. 11 is a front view showing a mascara brush according to a fifth embodiment of the present invention, Fig. 12 is a longitudinal sectional view of Fig. 11, Fig. 13 is a front view showing a mascara brush according to a sixth embodiment of the present invention, and Fig. 14 is a longitudinal sectional view of Fig. 13.

Referring to Figs. 9 to 14, the mascara brushes according to the fourth to sixth embodiments of the present invention are different from those according to the first to third embodiments of the present invention wherein the first brush molding part 20A and the second brush molding part 20B are formed in the circumferential or radial direction of the mascara brush, in that the first brush molding part 20A and the second brush molding part 20B are formed at different positions from each other along the outer periphery of the body part 10 in the length direction of the mascara brush.

Unlike the first to third embodiments wherein the brush members are arranged to have different materials from each other along the circumferential direction of the mascara brush, the fourth to sixth embodiments have the brush members arranged to have different materials from each other along the length direction of the mascara brush.

Referring to Figs. 9 and 10, the mascara brush according to the fourth embodiment of the present invention is configured to have the first brush molding part 20A and the second brush molding part 20B formed in turn along the length direction of the body part 10.

If the boundary portion between the first brush molding part 20A and the second brush molding part 20B is brought into contact with a user's eyelashes, therefore, the second material and the third material can be at the same time provided at one portion of the eyelashes arranged and the other portion thereof, and if the width of the first brush molding part 20A or the second brush molding part 20B in the length direction thereof is smaller than 1/2 of the width of the whole eyelashes of the user, the second material or the third material can be provided at a plurality of positions spaced apart from each other.

Referring to Figs. 11 and 12, the mascara brush according to the fifth embodiment of the present invention is configured to further have a third brush molding part 20C made of a fifth material.

In the same manner as the fourth material, the fifth material is used to easily define the features different from the first, second and third materials in their materials, hardness and colors, and in the preferred embodiments of the present invention, therefore, the fourth material is not suggested to define the specific components, compositions and colors and may have the same features as the fourth material.

The third brush molding part 20C, which is made of the fifth material, is formed after the first brush molding part 20A and the second brush molding part 20B along the length direction of the body part 10, thereby forming the arrangement of the brush members made of three different materials along the length direction of the mascara brush.

The three sections are defined along the length direction of the body part 10, and on the three sections, the first brush molding part 20A, the second brush molding part 20B, and the third brush molding part 20C are formed, such that as the mascara brush is moved in the length direction thereof, one of the first brush molding part 20A, the second brush molding part 20B, and the third brush molding part 20C can be freely selected and changed to apply the mascara to the eyelashes in accordance with the user's preference.

Further, if the boundary portion between the first brush molding part 20A and the second brush molding part 20B or between the second brush molding part 20B and the third brush molding part 20C are contacted with the eyelashes, the second material and the third material can be at the same time provided at one portion of the eyelashes arranged and the other portion thereof or the third material and the fifth material can be at the same time provided thereat.

Referring to Figs. 13 and 14, the mascara brush according to the sixth embodiment of the present invention is different from that according to the fifth embodiment of the present invention, in that the first brush molding part 20A, the second brush molding part 20B, and the third brush molding part 20C are repeatedly formed in turn along the length direction of the body part 10.

Therefore, a specific portion among the first brush molding part 20A, the second brush molding part 20B and the third brush molding part 20C, or a specific portion of the boundary portions between the first brush molding part 20A and the second brush molding part 20B, between the second brush molding part 20B and the third brush molding part 20C, and between the first brush molding part 20A and the third brush molding part 20C is contacted with a specific position of the eyelashes arranged serially, thereby at the same time providing the two or three different materials to the eyelashes in the arrangement direction of the eyelashes.

In the description of the present invention, the above-mentioned various use methods can be selected and changed with the single mascara brush in accordance with the user's conveniences or demands.

Even though not shown in the drawings, a comb molding part is additionally formed to have a plurality of combs (having, for example, one to five vertical arrangements) adapted to tidy the eyelashes, thereby strengthening the function of separating the eyelashes, and the comb molding part is made of one of the first to third materials.

Even though not shown in the drawings, further, the bristles 22 (and the extended bristles 12) are formed to have a length I gradually shortened toward the end side of the body part 10 in the length direction thereof, such that the mascara brush is inclined to easily apply the mascara to both end portions of the eyelashes arranged serially.

The present invention is not limited to the above-mentioned preferred embodiments, but it may be accomplished through a variety of embodiments wherein the bristles are twisted spirally between two wires connected to the brush rod and are formed radially to have various shapes like round, triangle or fan around the center wire shaft, they are formed by means of injection, they are formed by means of assembly, and they are formed by means of the combination of the injection and assembly.

According to the preferred embodiments of the present invention, further, the bristles 22, the extended bristles 12 and the combs have round sectional shapes, but they may have various sectional shapes such as polygonal and oval shapes.

## Claims

1. A mascara brush comprising:
a body part (10) made of a first material; and
a brush molding part (20) made of second and third materials and having body part-coupling members (21) each coupled to the outer periphery of the body part and a plurality of bristles (22) arranged vertically and horizontally along the outer peripheries of the body part-coupling members.

2. The mascara brush according to claim 1, wherein the body part (10) comprises:
a central bar (11); and
a plurality of extended bristles (12) protruded horizontally from the outer periphery of the central bar (11) and adapted to form bristle arrangements capable of applying mascara together with the plurality of bristles (22) of the brush molding part (20).

3. The mascara brush according to claim 2, wherein the central bar (11) of the body part (10) is made of a fourth material having higher hardness than the first material and has a central portion (11a) formed at the center of the body part (10) and an outer peripheral portion (11 b) formed around the outer periphery of the central portion (11 a) in such a manner as to be connected to the extended bristles (12).

4. The mascara brush according to claim 1, wherein the brush molding part (20) comprises:
a first brush molding part (20A) made of the second material and having the body part-coupling member (21) coupled to a portion of the outer periphery of the body part (10); and
a second brush molding part (20B) made of the third material and having the body part-coupling member (21) coupled to the other portion of the outer periphery of the body part (10) or the first brush molding part (20A).

5. The mascara brush according to claim 4, wherein the body part-coupling members (21) of the first brush molding part (20A) and the second brush molding part (20B) are formed at different positions from each other in the circumferential direction of the body part (10).

6. The mascara brush according to claim 4, wherein the body part-coupling members (21) of the first brush molding part (20A) and the second brush molding part (20B) are formed multi-layered in the radial direction of the body part (10).

7. The mascara brush according to claim 4, wherein the first brush molding part (20A) and the second brush molding part (20B) are formed at different positions from each other in the length direction of the body part (10).

8. The mascara brush according to claim 7, wherein the brush molding part (20) further comprises a third brush molding part (20C) formed at a different position from the first brush molding part (20A) and the second brush molding part (20B) in the length direction of the body part (10), the third brush molding part (20C) being made of a fifth material.

9. The mascara brush according to claim 1, further comprising a comb molding part made of the first, second, or third material and forming comb arrangements capable of tidying eyelashes.
